**Europäisches Patentamt**

**European Patent Office**

**Office européen des brevets**

(19)

(11) Publication number: **0 295 834**
**A1**

# (12) EUROPEAN PATENT APPLICATION

(21) Application number: **88305310.0**

(22) Date of filing: **10.06.88**

(51) Int. Cl.⁴: **C04B 28/24 , C09J 1/02 , C09D 1/02 , C09D 5/18**

(30) Priority: **16.06.87 US 62863**

(43) Date of publication of application:
**21.12.88 Bulletin 88/51**

(84) Designated Contracting States:
**DE ES FR GB IT**

(71) Applicant: **MINNESOTA MINING AND MANUFACTURING COMPANY**
**3M Center, P.O. Box 33427**
**St. Paul, Minnesota 55133-3427(US)**

(72) Inventor: **Park, Soon C .c/o Minnesota Mining and**
**Manufacturing Comp. 2501 Hudson Road PO. Box 33427**
**St. Paul Minnesota 55133-3427(US)**

(74) Representative: **Baillie, Iain Cameron et al**
**c/o Ladas & Parry Isartorplatz 5**
**D-8000 München 2(DE)**

(54) **High temperature resistant inorganic composition.**

(57) A high temperature resistant inorganic composition useful as an adhesive or coating comprising at least one inorganic silicate, preferably an alkali metal silicate; a colloidal silica sol; an inorganic particulate filler material, preferably an aluminum oxide powder; and a metal powder, preferably aluminum.

EP 0 295 834 A1

## HIGH TEMPERATURE RESISTANT INORGANIC COMPOSITION

### Technical Field

A high temperature resistant inorganic composition comprising at least one alkali metal silicate, a colloidal silica sol, a ceramic material, such as aluminum oxide powder, and metal powders.

### Background Art

Alkali metal silicates have been utilized for decades as adhesives for bonding paper, wood, metals, and ceramic materials, the preferred silicates being of the sodium and potassium variety. Furthermore, sodium silicate has also been an attractive adhesive material for fire proof building construction. However, such adhesives have had physical and mechanical property problems, such as adhesive bond strength, moisture resistance, and impact strength. Accordingly, because of such drawbacks, a great deal of effort has been expended to improve such properties. The prior art contains numerous references wherein the above goals were sought to be achieved. In each case, however, either the entire combination of the properties sought could not be achieved, or their achievement required extraordinary measures such as a high cure temperature.

For example, U.S. Patent No. 2,111,131 discloses the addition of zinc oxide to sodium silicate to provide improved water resistance.

U.S. Patent No. 2,526,787 discloses the use of an aqueous solution of fluosilicate of magnesium or zinc to improve moisture resistance of paper-to-paper bonding with a sodium silicate-based adhesive. Paper to be bonded is taught to be treated with fluosilicate of magnesium or zinc prior to bonding with the silicate adhesive.

U.S. Patent No. 3,248,250 discloses the use of a small amount of a soluble sodium silicate in an aqueous solution containing phosphate ion, metal ion, and chromate or molybdate ions. The patent asserts that if soluble sodium silicate is included in the composition, curing temperature can be effectively reduced to as low as 250° F without sacrifice in quality of the final coating.

U.S. Patent No. 3,658,564 discloses a water-insensitive insulating structure comprised of expanded perlite bonded through an in situ-produce water-insoluble crystalline reaction product of perlite together with sodium or potassium silicate. The patent also discloses that weight ratios of $SiO_2:Na_2O$ below 3:1 are not capable of producing a water-insensitive structure material, and weight ratios above 4:1 are economically unattractive.

U.S. Patent No. 4,162,169 discloses a paint binder utilizing a potassium or sodium silicate dispersion having a silicon dioxide to alkali-metal oxide mole ratio of from 4.8:1 to 6.0:1. The high mole ratio is achieved by the inclusion of a silicon dioxide hydrogel. The references also describes the use of silicone in the form of methyltrimethoxy silane, which assertedly stabilizes the solution by converting it to a silicone nucleated hydrogel sol where the silicone dioxide from the hydrogel sol reacts with the hydrolyzed silicone. Also disclosed is the inclusion of protective elements for ferrous metals and aluminum alloys, such as zinc dust or aluminum flakes which protect by galvanic action, or by addition of pigments for coloring, or fillers to achieve a given final film characteristic.

U.S. Patent No. 4,169,735 discloses an inorganic coating composition comprising aqueous solutions of water-soluble silicate, such as potassium silicate, and water-soluble borate latent insolubilizers, such as sodium borate, together with an inorganic pigment, such as titanium dioxide.

U.S. Patent No. 4,309,220 discloses an inorganic adhesive composition for bonding porous to non-porous metallic materials. The adhesive comprises a sodium silicate solution with a metallic powdered filler, the invention being characterized in that the filler is made up of a mixture of sodium silicate powders which are coated with a superficial layer of an aluminum-based diffusion alloy, together with an ultrafine chromium powder.

U.S. Patent No. 4,415,364 discloses a unitary inorganic binder composition comprising a powdery mixture of a powdered alkali metal silicate, such as sodium silicate, an alkali metal borate, such as sodium or potassium borate, and silicon polyphosphate as a curing agent.

U.S. Patent No. 4,600,437 discloses an inorganic material comprising a mixture of water glass, e.g., a sodium silicate solution, and metakaolin, obtained by heat treating a kaolin group clay mineral at 600°C to 900°C. It is asserted that the composition exhibits excellent water and hot water resistance. When the composition contains a hydrous magnesium silicate-type clay mineral, it further exhibits excellent water resistance.

U.K. Patent No. 1,128,992 discloses an adhesive composition consisting of sodium silicate, calcium aluminate, iron oxide powder and ammonium chloride.

U.K. Patent No. 2,107,744 discloses an inorganic composition taught to be useful as a heat-resistant coating material, or as an adhesive agent for bonding metal and/or ceramic articles, comprising an alkali metal silicate or aluminate, an inorganic oxide powder, such as alumina or silica, and a powdery inorganic compound having cation exchangeability, such as mica.

U.K. Patent No. 2,100,745 substitutes metal powders for inorganic oxide powders in the previous reference, with iron, copper, silver or a mixture thereof being specifically disclosed.

Glass compositions, commonly called frits, have also been reported as being utilized in a high temperature adhesive, with U.S. Patent Nos. 2,898,236; 3,171,750; and 3,180,742 being exemplary. Such processing techniques are costly and involve the fusion of glassy adhesive particles in the ceramic adhesive at high temperatures requiring several steps: (1) frit preparation; (2) milling to powders; (3) slip preparation; (4) application of slip to materials to be jointed; (5) drying; and (6) heat treatment of the bond to temperatures ranging from 1000°F to 2000°F, depending on the frit composition used, in order to provide adhesive bonds. Furthermore, high pressure is also required during the high temperature heat treatments. Step (1) also requires two processes: (a) firing properly selected ceramic oxides, halides or metals to very high temperatures, until a smooth, pliable thread can be drawn from the melt, and (b) quenching same in water.

U.S. Patent No. 3,171,750 discloses a ceramic adhesive comprising a ceramic refractory frit, a suspending agent such as colloidal silica or clay and water. Bonding requires heating for about 20 minutes at about 1750°F under a pressure of 50 psi.

U.S. Patent No. 3,180,742 discloses a ceramic adhesive comprising a ceramic refractory frit, a suspending agent such as colloidal silica or clay, water and fine particle metal powders, such as aluminum, copper, carbonyl iron, carbonyl nickel, and silicon. Bonds require the same physical conditions as in the previously-mentioned reference.

Accordingly, there has been a desire to obtain a composition having the aforementioned properties while being low temperature curable, e.g., about 250°F, yet having high temperature, e.g., about 1000°F, stability, a desire heretofore unattainable.

## Summary of the Invention

The present invention comprises an inorganic composition having high temperature resistance, high moisture resistance, high impact strength, thermal shock resistance, resilience, i.e., non-brittleness, ease of application, low temperature cure requirement, as well as low cost, a composition which is unique in meeting all the aforementioned properties.

The composition is comprised of at least one silicate, preferably an alkali metal silicate, such as sodium and/or potassium silicates, colloidal silica sol, a ceramic material, such as aluminum oxide powder, together with a metal powder.

The described composition displays all of the desirable physical and mechanical properties detailed above. In addition, the composition is extremely useful for bonding metals, ceramic materials, and wood and other porous surfaces, and metal to ceramic. Furthermore, it has been discovered that the novel material can be utilized as a coating composition on metals as well as ceramics and porous surfaces. Additionally, it is compoundable as a two-component system to provide excellent shelf life.

## Detailed Description

The composition of the invention comprises primarily four parts: a binder, a modifier, a filler, and a toughener. Binders include silicates, such as sodium, potassium, lithium silicates, and the like, with alkali metal silicates being preferred. The silicates should be at least dispersible in water. Powder alkali metal silicates may also be used as effectively as their aqueous counterparts. These powder silicates similarly should be at least water dispersible, and preferably water soluble. Combinations of these binders can also be included, and in fact a preferred binder is the combination of sodium and potassium silicates, because potassium silicate has been found to assist in achievement of physical properties when combined with sodium silicate, such as impact and bond strengths.

I have discovered that the weight ratio of silicon dioxide to alkali metal oxide is an important factor in optimizing the desired adhesive properties. For sodium silicate binders, the preferred ratio, by weight, ranges from 1.6:1 to 3.75:1, while the most preferred, for an aqueous sodium silicate, is 2:1. For potassium silicates, the preferred weight ratio ranges from 2:1 to 2.6:1, with the most preferred being 2.1:1. Increasing ratios tend to reduce stability, i.e., by increasing the potential for crystallization, while decreasing ratios tend to reduce bond strength and water resistance.

I have found that the preferred compositional range for this binder component is from about 1 to about 70% by weight sodium silicate, with up to about 60% by weight potassium silicate. The preferred solids content of the sodium silicate solution used in my invention typically range from 25 to 45%. Furthermore, with the preferred 2.0:1 weight ratio of silicon dioxide to sodium oxide, the preferred solids content is about 45%. Relative to aqueous potassium silicate, at the most preferred weight ratio of silicon dioxide to potassium oxide of 2.1:1, the preferred solids content is about 40%.

The modifier component has been found to increase water resistance and overlap shear strength. This modifier component in my invention is a colloidal silica sol. In the present invention, an increased silicon dioxide to alkali metal oxide weight ratio is desirable because the higher this ratio becomes, the greater the water resistance of the water resultant adhesive bonds. This higher ratio is obtained in the present invention through the addition of a colloidal silica sol thereto. For some unexplainable reason, a synergistic effect occurs when the increased ratio is provided by addition of the sol.

I have found that conventional and commercially available aqueous dispersions of colloidal silica sols having concentrations of silicon dioxide in the range of between about 15 to about 50% by weight are effective, at the particle sizes varying from about 3 to about 100 microns. Preferably, my composition contains from about 20 to about 60% by weight of the colloidal silica sol based on the silicate component.

Fillers are basically added to increase overlap shear strength, and various inorganic particulate materials can be utilized in my invention. Examples of such materials include silicon dioxide, aluminum oxide, mullite, clay, titanium dioxide, alumino-silicate, silicon carbide, silicon nitride, and/or fibrous materials such as silicon carbide fibers, NextelTM, ceramic whiskers and the like, or mixtures thereof. A preferred filler is aluminum oxide powder with an average particle size of around 0.5 micron. The composition preferably contains from about 5 to about 35% by weight of such fillers, especially when the preferred aluminum oxide powder is utilized.

Compositions containing only the foregoing components have been found to be too brittle to be broadly useful as a structural adhesive. Accordingly, a further novel aspect of my invention is that metal powders, even when not sintered into the matrix, are capable of acting as toughening agents. Metal powders such as aluminum, copper, magnesium, manganese, and the like all can be utilized, or mixtures thereof, with aluminum powder being preferred. The addition of such metal powders not only increases impact strength but also increases lap shear strength and water resistance.

From about 20 to about 70% by weight of the composition has been found to be a preferred concentration range, especially when utilizing aluminum metal powders.

Typical and conventional processing aids can be added to the composition as desired.

The composition of my invention can typically be prepared by mixing pre-calculated amounts of binders, modifiers, fillers, and tougheners. As the examples will illustrate, the composition can be formulated into a two-part system to optimize storage stability. The composition thus prepared can be used to bond metals as well as ceramic materials, or as a coating composition.

The physical and mechanical performance properties of the composition were evaluated for the most part with alclad 2024-T3 aluminum alloy. In such tests, the aluminum plate was cleaned and etched chemically to provide a fresh surface for good adhesion. The dimension of the aluminum plate was 4x1x0.062 inches. The surface of the aluminum pieces to be bonded was prepared by using ASTM #D2674-72. The aluminum pieces were first cleaned with a solution of "Oakite 164" for 10 minutes, followed by chemical etching in a solution containing 30 parts of water, 10 parts of sulfuric acid, and 2 part of hydrated sodium chromate for another 10 minutes. The pieces were then rinsed thoroughly in clean tap water and air dried for 10 minutes, followed by forced drying at 150° F for 10 minutes. The composition was directly applied to the substrate, with a typical bond area being 1/2 square inch. Two small clips were attached to ensure better contact during drying and curing, the clips typically applying approximately 2 to 3 psi to the bond area.

It is generally preferred to drive off any water during the curing process, and samples were thus placed

4

in an oven and slowly heated over approximately a 10 hour period to 250°F, retained at that temperature for 8 hours, and then cooled to room temperature in the oven. This is considered my "standard cure" of the composition. While room temperature cure is equally as effective, same obviously requires a substantially longer period of time for completion.

Other methods of applying heat to remove water and attain effective cure temperature are equally applicable, examples thereof being microwave and induction techniques.

Evaluation of the composition was accomplished by determining overlap shear strength and impact strength of the bonds. Test specimens were placed in Instron-type equipment and tested at a crosshead speed of 0.1 inches per minute. The force at break was recorded and overlap shear strength determined. Impact strength was determined using a pendulum-type impact machine. A thermal cycling experiment was carried out to determine thermal shock resistance. The sample in this instance was placed directly into a 600°F furnace and held there for 15 minutes, followed by cooling of the sample immediately to room temperature. Overlap shear strength was measured for samples exposed to up to 50 thermal cycles.

The following specific examples are descriptive of the manner in which my novel compositions can be prepared and used, and are provided for illustrative purposes only, not being intended to limit the invention.

## Examples 1-4

These Examples illustrate the effect of the weight ratio of silica to sodium oxide on resultant mechanical properties in a soluble sodium silicate and aluminum oxide powder mixture. Aluminum oxide powder in the amount of 7.26 grams having an average particle size of 0.6 micrometer ("CR6" from the Baikowski International Corporation) were added to 5.36 grams of soluble sodium silicate having different weight ratios of silica to sodium oxide, all samples commercially available from the Philadelphia Quartz Company. The mixture was blended thoroughly utilizing a magnetic stirrer and applied to alclad 2024-T3 aluminum substrate which was cleaned and chemically etched as discussed above. Specimens were cured using the standard curing procedure described above, whereupon overlap shear strengths and impact strengths were measured, with the results listed in Table 1. The data illustrated in Table 1, and in the following examples, represent an average of at least four samples.

### Table 1

| Example | Wt. Ratio $SiO_2/Na_2O$ | Density $g/cm^3$ | PH | OLS. psi | Impact Strength in-lb |
|---------|---------|---------|------|------|------|
| 1 | 1.60 | 1.67 | 13.4 | 279 | 8 |
| 2 | 2.0 | 1.53 | 12.7 | 810 | 21 |
| 3 | 2.58 | 1.50 | 11.8 | 202 | – |
| 4 | 3.22 | 1.38 | 11.3 | 205 | 10 |

## Examples 5-10

These Examples illustrate the effect of colloidal silica sol in a binder system consisting of soluble sodium silicate (SS), aluminum oxide powder, and colloidal silica sol (CSS). Varying amounts of "Nyacol 5050", from the Philadelphia Quartz Company, were added to a solution of 8.20 grams of soluble sodium silicate having a silica to sodium oxide ratio of 2.0 and mixed thoroughly for 1 minute utilizing a magnetic stir bar. The resultant homogeneous solution was then thickened by addition of 7.08 grams of aluminum oxide powder thereto, followed by thorough mixing. The adhesive was carefully applied to a cleaned surface of alclad 2024-T3 aluminum. After curing using the standard cure procedure, the mechanical properties of

5

the Examples were determined with detailed results provided in Table 2. Examination of these results clearly indicate that the overlap shear strength increases significantly as the amount of colloidal silica sol increases. The maximum effect is obtained when approximately 21% by weight is added to the composition, or the weight percent of sol based on silicate is 50.

## Table 2

| Example | CSS addition gm | css, % | CSS/SS x 100 | OLS. psi. | Impact Strength in-lb |
|---------|------|--------|--------------|-----------|----------------------|
| 5 | 0.04 | 0.26 | 0.5 | 800 | 16 |
| 6 | 0.20 | 1.3 | 2.4 | 898 | 16 |
| 7 | 1.0 | 6.15 | 12.2 | 895 | 28 |
| 8 | 2.96 | 16.3 | 36.2 | 1078 | 16 |
| 9 | 4.08 | 21.1 | 50 | 1210 | 12 |
| 10 | 4.90 | 24.3 | 60 | 950 | 15 |

## Examples 11-14

These Examples examine the effect of the concentration of aluminum oxide powder in a binder system consisting of soluble sodium silicate and colloidal silica sol. The aluminum oxide powder was added to the homogeneous mixture of 8.20 grams of soluble sodium silicate having a silica to sodium oxide ratio of 2.0 and 4.08 grams of colloidal silica sol, followed by thorough mixing with a magnetic stir bar. The prepared adhesive was applied to an appropriate surface of the aluminum test material and cured using the standard procedure. Mechanical properties of the bonds are summarized in Table 3, where it is illustrated that bond strength can be increased by the addition of aluminum oxide powder. Optimum results were obtained when the system contained approximately 37% by weight of aluminum oxide, providing approximately 66% solids by weight. The concentrations of colloidal silica sol and soluble sodium silicate were chosen to provide about a 1:2 ratio of the two components in accordance with the optimum results disclosed in Table 2.

## Table 3

| Example | $Al_2O_3$ gm | % | % Solids | OLS. psi | Impact Strength in-lb |
|---------|------|----|----------|----------|----------------------|
| 11 | 4.54 | 27 | 61 | 923 | 12 |
| 12 | 5.78 | 32 | 64 | 986 | 10 |
| 9 | 7.08 | 37 | 66 | 1210 | 12 |
| 13 | 8.89 | 42 | 69 | 1125 | 25 |
| 14 | 10.89 | 47 | 72 | 1092 | 13 |

## Examples 15-19

These Examples illustrate the effect of colloidal silica sol in a binder system consisting of soluble sodium silicate (SS) and aluminum metal powder. Varying amounts of colloidal silica sol (CSS) were added to a solution of 1.64 grams soluble sodium silicate and mixed thoroughly using a magnetic stir bar for about 1 minute. The aluminum metal powder, having an average particle size of 20 micrometers (available from the John Mattney Corporation) in the amount of 2.05 grams were then mixed thoroughly. The composition was used to prepare bonds as in all earlier Examples, with the results of mechanical properties thereof being summarized in Table 4. It should be noted that Table 4 indicates that the addition of a relatively small amount of colloidal silica sol increases overlap shear strength rather dramatically.

## Table 4

| Example | CSS addition gm | % | CSS/SS x100 | OLS. psi | Impact Strength in-lb |
|---------|-----------------|------|-------------|----------|------------------------|
| 15 | 0 | 0 | 0 | 1475 | 47 |
| 16 | 0.33 | 8.2 | 20 | 1889 | 45 |
| 17 | 0.49 | 11.8 | 30 | 1640 | |
| 18 | 0.82 | 18.2 | 50 | 1487 | 53 |
| 19 | 1.15 | 23.8 | 70 | 1208 | 34 |

### Examples 20-25

These Examples further illustrate the effect of combining aluminum metal powder in a system consisting of soluble sodium silicate, colloidal silica sol and aluminum oxide powder. A homogeneous slurry mixture was prepared utilizing 6.56 grams of soluble sodium silicate, 3.26 grams of colloidal silica sol and 5.66 grams of aluminum oxide powders, the concentrations of these components chosen to use the optimum results obtained from previous examples, i.e., wherein the ratio of colloidal silica sol to sodium silicate is 1:2 and the aluminum oxide amounts to 37% by weight of the mixture. The composition was applied and bonded as per previous Examples, and the mechanical properties of the system are contained in Table 5. Significant increases in mechanical performance are illustrated in Table 5, e.g., at 40% addition of aluminum metal powder, a 400% and 60% increase in impact strength and overlap shear strength, respectively, were noted.

## Table 5

| Example | Al addition gm | % | OLS. psi | Impact Strength in-lb |
|---------|----------------|-----|----------|------------------------|
| 9 | 0 | 0 | 1210 | 12 |
| 20 | 0.16 | 1 | 1016 | 46 |
| 21 | 1.72 | 10 | 1246 | 28 |
| 22 | 3.88 | 20 | 1566 | 22 |
| 23 | 6.64 | 30 | 1680 | 50 |
| 24 | 10.32 | 40 | 1902 | >60 |
| 25 | 15.48 | 50 | 1934 | >60 |

### Examples 26-28

These Examples illustrate the effect of aluminum oxide powder on the mechanical properties and water resistance of the composition. In these Examples, an attempt was made to reduce the amount of aluminum oxide powder to reduce material cost without sacrificing system performance. Therefore, varying concentrations of aluminum oxide powder were prepared in a binder system consisting of 6.56 grams of sodium silicate, 3.26 grams of colloidal sol and 10.32 grams of aluminum powder. The composition was prepared and bonded as per previous Examples, the results thereof being illustrated in Table 6, where a significant initial increase in bond strength was observed with the addition of 10 weight percent of aluminum oxide powder. Further, additional increases in aluminum oxide powder concentration does not significantly improve bond strength. Table 6 also illustrates that water resistance, expressed by the percentage retention of shear strength after 7 days water soak is not generally influenced by the addition of aluminum oxide powders.

## Table 6

| Example | Al$_2$O$_3$ gm | % | OLS. psi Dry | Wet | Retention % | Impact Strength in-lb |
|---------|------|------|------|------|------|------|
| 26 | 0 | 0 | 1342 | 978 | 73 | 47 |
| 27 | 2 | 10 | 1908 | 1425 | 74 | 58 |
| 28 | 4 | 16.6 | 1930 | 1423 | 74 | -- |
| 24 | 5.66 | 22 | 1902 | 1408 | 74 | >60 |

### Examples 29-30

These Examples illustrate the effect of sodium silicate concentration in the composition, with varying amounts of sodium silicate being mixed into a system comprising 3.26 grams of the colloidal sol, 5.66 grams aluminum oxide, and 10.3 grams aluminum. The results of bonds formed from this system are summarized in Table 7, which illustrates that increasing the concentration of sodium silicate reduces not only the overlap shear strength without water exposure and impact strength, but also water resistance.

## Table 7

| Example | SS gm | % | OLS. psi Dry | Wet | Retention % | Impact Strength in-lb |
|---------|------|------|------|------|------|------|
| 24 | 6.56 | 25.4 | 1902 | 1408 | 74 | >60 |
| 29 | 10.82 | 36 | 1896 | 1013 | 53 | 57 |
| 30 | 15.74 | 45 | 1656 | 645 | 30 | 27 |

### Examples 31-34

These Examples illustrate the water resistance, or bond strength retention, of the composition based on the addition of colloidal silica sol. These results are tabulated in Table 8, where an attempt was made to relate the amount of colloidal sol present in the adhesive to water resistance or percentage bond retention. The data illustrates that while colloidal sol has little effect on dry overlap shear strength, it plays a very important role in the water resistance of the bonds. Table 8 contains the ratio of colloidal silica sol to sodium silicate because it is believed that the improvement of water resistance of the adhesive may be due to a unique reaction between the colloidal sol and sodium silicate, and this theory is supported by the data of Table 8. For example, as this ratio increases from 5.25% to 50%, the water retention increases from 17% to about 75%, a significant increase.

## Table 8

| Example | 31 | 32 | 33 | 30 | 29 | 24 | 34 | 27 |
|---|---|---|---|---|---|---|---|---|
| SS, gm | 4.04 | 4.29 | 3.94 | 7.87 | 5.41 | 3.28 | 4.63 | 3.28 |
| CSS, gm | 0.21 | 0.41 | 0.82 | 1.63 | 1.63 | 1.63 | 2.31 | 1.63 |
| $Al_2O_3$, gm | 0.69 | 0.76 | 0.77 | 2.83 | 2.83 | 2.83 | 2.5 | 1.0 |
| Al, gm | 6.23 | 6.90 | 6.98 | 5.16 | 5.16 | 5.16 | 7.2 | 5.16 |
| CSS, % | 1.9 | 3.3 | 6.6 | 9.3 | 10.8 | 12.6 | 13.9 | 14.7 |
| CSS/SS, % | 5.25 | 9.51 | 21.0 | 20.7 | 30.1 | 50 | 50 | 50 |
| SS, % | 36.1 | 34.7 | 31.4 | 45.0 | 36.0 | 25.4 | 27.8 | 29.7 |
| Al, % | 55.8 | 55.8 | 55.8 | 29.5 | 34.4 | 40.0 | 43.3 | 46.6 |
| $Al_2O_3$, % | 6.2 | 6.2 | 6.2 | 16.2 | 18.8 | 22.0 | 15.0 | 9.0 |
| (Al & $Al_2O_3$), % | 62.0 | 62.0 | 62.0 | 45.7 | 53.2 | 62.0 | 58.3 | 55.6 |
| OLS. psi Dry | 1901 | 2026 | 2075 | 1656 | 1896 | 1902 | 1995 | 1908 |
| OLS. psi Wet | 326 | 352 | 798 | 645 | 1013 | 1408 | 1389 | 1425 |
| Retention, % | 17 | 17 | 39 | 39 | 53 | 74 | 70 | 75 |
| Impact Strength in-lb | >>60 | >>60 | >>60 | 27 | 57 | 60 | >>60 | 58 |

### Example 35

Compositions designed for high temperature usage would typically be exposed to severe thermal cycles. Accordingly, this Example utilizes the composition of Example 34 from which bonds were prepared as in previous Examples. The resultant samples were placed directly into a 600°F furnace for 15 minutes, followed by forced air cooling, which process constitutes one thermal cycle. Mechanical properties were determined after varying thermal cycles, the results thereof summarized in Table 9. The numbers in parenthesis indicate the percentage retention after the number of thermal cycles indicated.

## Table 9

| | OLS. psi | | |
|---|---|---|---|
| 0 | 5 cycles | 20 | 50 |
| | 1727 | 1654 | 1690 |
| 2025 | | | |
| | (85%) | (82) | (84) |

### Example 36

In this Example, a powdered form of sodium silicate was substituted for the aqueous sodium silicate of prior Examples. In this case, a two-part composition was prepared which may be useful to increase adhesive shelf life if desired. In this Example, the powdered sodium silicate was the Philadelphia Quartz Corporation "GD", which has a weight ratio of silicon dioxide to sodium oxide of 2.0 and contains 18.5 weight percent of water. All powdered components constituted one part with liquid components the second part.

Bonds prepared as per prior Examples are summarized in Table 10, with the material of Example 34 being included for comparison.

## Table 10

|  | Example #34 | Example #36 |
|---|---|---|
| aqueous solution silicate, gm | 6.56 | —— |
| powder sodium silicate, gm | —— | 3.57 |
| water | —— | 2.99 |
| colloidal silica sol | 3.27 | 3.27 |
| Al$_2$O$_3$ powder | 3.54 | 3.54 |
| Al powder | 10.20 | 10.20 |
| OLS. psi Dry | 1995 | 1785 |
| OLS. psi Wet | 1389 | 1454 |
| Retention, % | 70 | 81 |
| Impact strength, in-lb | >>60 | >60 |

## Examples 37-42

These Examples represent substitution of portions of the soluble sodium silicate with aqueous potassium silicate. Table 11 presents a summary of the results from bonds obtained when the potassium silicate "KASIL #6", from Philadelphia Quartz, having a ratio of silicon dioxide to potassium oxide of 2.1 replaces varying amounts of sodium silicate. Table 11 illustrates that an unexpected optimum mechanical performance of the adhesive was observed when approximately 13% of sodium silicate was replaced by potassium silicate.

## Table 11

| Example | $\frac{PS}{(PS+SS)}$ x100, % | OLS. psi Dry | Wet | Retention % | Impact Strength in-lb |
|---|---|---|---|---|---|
| 37 | 0 | 1804 | 1431 | 79 | >60 |
| 38 | 6 | 1821 | 1575 | 86 | >60 |
| 39 | 13 | 1939 | 1594 | 82 | >>60 |
| 40 | 20 | 1851 | 1609 | 87 | 60 |
| 41 | 26 | 1796 | 1515 | 84 | 60 |
| 42 | 32 | 1684 | 1525 | 91 | 57 |

Example 43

In this Example, the powdered version of the silicates were utilized. Sample preparation was essentially the same as Example 39 with the exception that the powdered sodium and potassium silicates were utilized, enabling the adhesive to be prepared as a two-part system. The sodium silicate used in this Example was the Philadelphia Quartz Corporation "GD", and the potassium silicate was Philadelphia Quartz Corporation "KASOLV 20", having a weight ratio of silicon dioxide to potassium oxide of 2.10.

Bonds prepared as per prior Examples are illustrated in Table 12, with Example 39 being included for comparison purposes.

## Table 12

|  | Example #39 | Example #43 |
|---|---|---|
| aqueous sodium silicate, gm | 5.71 | ― |
| aqueous potassium silicate, gm | 0.85 | ― |
| powder sodium silicate, gm | ― | 3.10 |
| powder potassium silicate, gm | ― | 0.41 |
| water, gm | ― | 3.05 |
| colloidal silica sol, gm | 3.27 | 3.27 |
| aluminum oxide powder, gm | 3.54 | 3.54 |
| aluminum powder, gm | 10.20 | 10.20 |
| OLS. psi Dry | 1972 | 1912 |
| OLS. psi Wet | 1594 | 1466 |
| Retention, % | 82 | 77 |
| Impact strength, in-lb | >>60 | >>60 |

Comparative Examples 1-4

The mechanical properties of some commercially available adhesives were evaluated and compared with those of Example 43. All bonds were prepared using aluminum substrate from prior Examples, and specimens were cured using the procedures recommended in supplier literature. The results are summarized in Table 13, whereupon it is clearly illustrated that the formulation of Example 43 outperformed the various commercial products.

## Table 13

| Products | OLS. psi Dry | OLS. psi Wet | Retention % | Impact Strength in-lb | Sources |
|---|---|---|---|---|---|
| No. P-78 | 247 | 0 | 0 | 16 | Sauereisen Cements Co. |
| Ceramabond 571 | 235 | 51 | 22 | 8 | Aremco Products |
| Durabond 950 | 1288 | 720 | 56 | 39 | Cotronis Corp. |
| EC-1137 | 490 | 304 | 62 | 15 | 3M Company |
| Example 43 | 1912 | 1466 | 77 | >>60 |  |

**Claims**

1. A high temperature-resistant inorganic composition comprising:
   (a) at least one inorganic silicate;
   (b) a colloidal silica sol;
   (c) an inorganic particulate filler material; and
   (d) a metal powder.

2. The composition of claim 1 wherein said silicate is an alkali metal silicate.

3. The composition of claim 2 further comprising up to about 60 percent by weight of potassium silicate.

4. The composition of claim 1 wherein said silicate is sodium silicate which is present at a concentration of from about 1 to about 70 percent by weight.

5. The composition of claim 1 wherein said sol is present at a concentration of from about 20 to about 60 percent by weight based on said silicate.

6. The composition of claim 1 wherein said filler material is aluminum oxide powder.

7. The composition of claim 1 wherein said filler material is present at a concentration of from about 5 to about 35 percent by weight.

8. The composition of claim 1 wherein said metal powder is aluminum.

9. The composition of claim 1 wherein said metal powder is present at a concentration of from about 20 to about 70 percent by weight.

10. An article comprising an element containing the composition of claim 1 on at least a portion of the surface thereof.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 255 361 (EXXON RESEARCH & ENGINEERING) * Claims 1-4; page 9, example 2; page 10, example 6 * | 1-3,5,8,10 | C 04 B 28/24 C 09 J 1/02 C 09 D 1/02 C 09 D 5/18 |
| X | DERWENT ABSTRACTS, week 8725, 1st July 1987, no. 87-176556/25, Derwent Publications Ltd, London, GB; & SU-A-12 68 537 (KHARK PROMSTROINIIP) 07-11-1986 | 1,2,4,6,8,10 | |
| A | US-A-3 959 063 (P.F. HAWTHORNE) * Claim 1; column 1, lines 46-47 * | 1-4,8-10 | |
| A,D | GB-A-2 100 745 (SHINAGAWA SHIRORENGA K.K.) * Abstract * | | |

TECHNICAL FIELDS SEARCHED (Int. Cl.4)

C 09 D
C 09 J

The present search report has been drawn up for all claims

| Place of search | Date of completion of the search | Examiner |
|---|---|---|
| THE HAGUE | 28-09-1988 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)